(19) Europäisches Patentamt / European Patent Office / Office européen des brevets

(11) **EP 3 849 170 B1**

(12) **EUROPEAN PATENT SPECIFICATION**

(45) Date of publication and mention
of the grant of the patent:
**20.12.2023 Bulletin 2023/51**

(21) Application number: **19857827.0**

(22) Date of filing: **26.06.2019**

(51) International Patent Classification (IPC):
***H04N 23/611*** (2023.01)    ***H04N 23/71*** (2023.01)

(52) Cooperative Patent Classification (CPC):
**G06T 5/008; H04N 23/611; H04N 23/71;**
**H04N 23/80;** G06T 2207/10024; G06T 2207/10028;
G06T 2207/20021; G06T 2207/30201;
H04N 5/2621; H04N 9/64

(86) International application number:
**PCT/CN2019/092931**

(87) International publication number:
**WO 2020/048192 (12.03.2020 Gazette 2020/11)**

(54) **IMAGE PROCESSING METHOD, ELECTRONIC DEVICE, AND COMPUTER-READABLE STORAGE MEDIUM**

BILDVERARBEITUNGSVERFAHREN, ELEKTRONISCHE VORRICHTUNG, UND COMPUTERLESBARES SPEICHERMEDIUM

PROCÉDÉ DE TRAITEMENT D'IMAGES, DISPOSITIF ÉLECTRONIQUE, ET SUPPORT D'ENREGISTREMENT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2018  CN 201811045659**

(43) Date of publication of application:
**14.07.2021  Bulletin 2021/28**

(73) Proprietor: **GUANGDONG OPPO MOBILE TELECOMMUNICATIONS CORP., LTD.**
**Dongguan Guangdong 523860 (CN)**

(72) Inventor: **YANG, Tao**
**Dongguan, Guangdong 523860 (CN)**

(74) Representative: **Ipside**
**7-9 Allées Haussmann**
**33300 Bordeaux Cedex (FR)**

(56) References cited:
CN-A- 104 994 306    CN-A- 108 419 028
CN-A- 109 246 354    JP-A- 2008 152 097
US-A1- 2007 070 214    US-A1- 2018 077 395

• CSAKANY P ET AL: "Relighting of Facial Images", AUTOMATIC FACE AND GESTURE RECOGNITION, 2006. FGR 2006. 7TH INTERNATIO NAL CONFERENCE ON SOUTHAMPTON, UK 10-12 APRIL 2006, PISCATAWAY, NJ, USA,IEEE, 10 April 2006 (2006-04-10), pages 55-60, XP010911531, DOI: 10.1109/FGR.2006.93 ISBN: 978-0-7695-2503-7

## Description

## TECHNICAL FIELD

The present disclosure relates to the field of computer technologies, and in particular to an image processing method, an electronic device, and a computer-readable storage medium.

## BACKGROUND

The electronic device can obtain an image by shooting, downloading, transmitting, etc. After the image is obtained, the electronic device can also perform some post-processing thereon, such as increasing the brightness of the image, adjusting the saturation of the image, or adjusting the color temperature of the image, etc. The electronic device can also add light effects to the image. The added light effects can simulate a change of light intensity, such that objects in the image may show a lighting effect. US 2018/077395 A1 discloses correcting overexposed facial regions using highlight removal and model based brightness restoration. US 2007/070214 A1 discloses highlight removal for a plurality of facial regions. Csakany P et al: "Relighting of Facial Images", published in the Proceedings of the 7th International conference on Automatic Face an Gesture Recognition, pages 55-60, on 10 April 2006, discloses facial relighting for glare removal on facial images using a human face surface normal model.

## SUMMARY OF THE DISCLOSURE

According to various embodiments of the present disclosure, an image processing method, an electronic device, and a computer-readable storage medium are provided.

An image processing method according to claim 1, including: obtaining an image to be processed; detecting one or more face regions in the image to be processed, and detecting an overexposed region in each of the one or more face regions; for each of the one or more face regions: obtaining a light effect intensity coefficient based on the overexposed region, and obtaining a target light effect model based on the light effect intensity coefficient, the target light effect model being a model that simulates a change in light; and performing light enhancement processing on the image to be processed based on the target light effect model.

An electronic device according to claim 13, including a memory and a processor. The memory stores a computer program; when the computer program is executed by the processor, the processor performs the following operations: obtaining an image to be processed; detecting one or more face regions in the image to be processed, and detecting an overexposed region in each of the one or more face regions; for each of the one or more face regions: obtaining a light effect intensity coefficient based on the overexposed region, and obtaining a target light effect model based on the light effect intensity coefficient, the target light effect model being a model that simulates a change in light; and performing light enhancement processing on the image to be processed based on the target light effect model.

A computer-readable storage medium, storing a computer program according to claim 14, wherein when the computer program is executed by a processor, the processor performs the following operations: obtaining an image to be processed; detecting one or more face regions in the image to be processed, and detecting an overexposed region in each of the one or more face regions; for each of the one or more face regions: obtaining a light effect intensity coefficient based on the overexposed region, and obtaining a target light effect model based on the light effect intensity coefficient, the target light effect model being a model that simulates a change in light; and performing light enhancement processing on the image to be processed based on the target light effect model.

In the image processing method, the electronic device and the computer-readable storage medium as described above, a face region in the image to be processed is detected, and an overexposed region in the face region is detected. A light effect intensity coefficient is obtained based on the overexposed region, and a target light effect model is obtained based on the light effect intensity coefficient. A light enhancement processing is performed on the image to be processed based on the target light effect model. After the overexposed region of the face region is detected, the intensity of the light effect enhancement processing is adjusted based on the overexposed region, such that the distortion of the face region caused by the light effect enhancement processing may not occur, and the accuracy of image processing may be improved.

Details of one or more embodiments of the present disclosure are presented in the accompanying drawings and description below. Other features, purposes and advantages of the present disclosure will become apparent from the specification, the accompanying drawings, and the appended claims.

## BRIEF DESCRIPTION OF THE DRAWINGS

To further illustrate technical solutions of embodiments of the present disclosure, drawings needed for description of the embodiments will be briefly introduced. Obviously, the following drawings are only some embodiments of the present disclosure. To any one of skill in the art, other drawings may be obtained without any creative work based on the following drawings.

FIG. 1 is a schematic view of an application environment of an image processing method according to an embodiment of the present disclosure.

FIG. 2 is a flow chart of an image processing method according to an embodiment of the present disclosure.

FIG. 3 is a flow chart of an image processing method according to an embodiment of the present disclosure.

FIG. 4 is a schematic view of performing a light effect enhancement process on a three-dimensional model according to an embodiment of the present disclosure.

FIG. 5 is a flow chart of an image processing method according to an embodiment of the present disclosure.

FIG. 6 is a schematic view of a connected region according to an embodiment of the present disclosure.

FIG. 7 is a flow chart of an image processing method according to an embodiment of the present disclosure.

FIG. 8 is a block diagram of an image processing device according to an embodiment of the present disclosure.

FIG. 9 is a block diagram of an image processing circuit according to an embodiment of the present disclosure.

## DETAILED DESCRIPTION

To make any one of skill in the art to understand the technical solutions of the present disclosure, the technical solutions provided by the present disclosure will be described in details by referring to the drawings and the embodiments. It should be understood that the specific embodiments described herein are only to explain the present disclosure, and are not used to limit the present disclosure.

Terms of "first", "second", and the like in the description of the present disclosure are to describe various elements, but the elements are not limited by these terms. These terms are only to distinguish an element from another element. For example, without departing from the scope of the present disclosure, a first client may be referred to as a second client, and similarly, the second client may be referred to as the first client. Both the first client and the second client are clients, but they are not the same client.

The present disclosure provides an image processing method, including: obtaining an image to be processed; detecting one or more face regions in the image to be processed, and detecting an overexposed region in each of the one or more face regions; for each of the one or more face regions: obtaining a light effect intensity coefficient based on the overexposed region, and obtaining a target light effect model based on the light effect intensity coefficient, the target light effect model being a model that simulates a change in light; and performing light enhancement processing on the image to be processed based on the target light effect model.

In some embodiments, the detecting the one or more face regions in the image to be processed includes: dividing pixels in each of the one or more face regions into a plurality of pixel blocks, the plurality of pixel blocks being different from each other; obtaining a first average brightness value of pixels in each of the plurality of pixel block; forming a first pixel region with pixel blocks, wherein each of the pixel blocks forming the first pixel region has the first average brightness value greater than a brightness threshold; and forming the overexposed region based on the first pixel region.

In some embodiments, the forming the overexposed region based on the first pixel region includes: for each of the one or more face regions: obtaining a second pixel region in the face region, wherein the face region consists of the first pixel region and the second pixel region; binarizing the face region based on the first pixel region and the second pixel region; and determining the overexposed region based on the binarized face region.

In some embodiments, the binarizing the face region based on the first pixel region and the second pixel region includes: configuring brightness values of pixels in the first pixel region to a non-zero brightness value; and configuring brightness values of pixels in the second pixel region to zero.

In some embodiments, the determining the overexposed region based on the binarized face region includes: obtaining a connected region in the binarized face region; obtaining an area ratio of the connected region to the face region; and forming the overexposed region based on the connected region of which the area ratio is greater than an area threshold.

In some embodiments, the obtaining the connected region in the binarized face region includes: obtaining the binarized face region; performing expanding and corroding on the binarized face region sequentially; and obtaining the connected region in the binarized face region after the expanding and corroding.

In some embodiments, the obtaining the light effect intensity coefficient based on the overexposed region includes: obtaining a second average brightness value of pixels in the overexposed region; and obtaining the light effect intensity coefficient based on the second average brightness value.

In some embodiments, the obtaining the light effect intensity coefficient based on the second average brightness value includes: obtaining the brightness threshold for forming the overexposed region; and configuring a ratio of the brightness threshold to the second average brightness value as the light effect intensity coefficient.

In some embodiments, the obtaining the second average brightness value of pixels in the overexposed region and obtaining the light effect intensity coefficient based on the second average brightness value includes: in response to two or more face regions being detected in the image to be processed, obtaining the second average brightness value of the overexposed region in each face region; and obtaining the light effect intensity coefficient based on a maximum second average brightness average among the second average brightness values corresponding to the two or more face regions.

In some embodiments, the performing light enhancement processing on the image to be processed based on the target light effect model includes: obtaining a light effect enhancement parameter of a color channel value corresponding to each pixel in the image to be processed based on the target light effect model; and performing the light enhancement processing on the color channel value of each pixel based on the light effect enhancement parameter.

In some embodiments, the performing light enhancement processing on the image to be processed based on the target light effect model includes: obtaining a depth image corresponding to the image to be processed; obtaining a three-dimensional model corresponding to the face region by performing three-dimensional reconstruction based on the image to be processed and the depth image; and performing the light enhancement processing on the three-dimensional model based on the target light effect model.

In some embodiments, the method further includes: presetting a reference light effect model; and the obtaining the target light effect model based on the light effect intensity coefficient includes: adjusting the reference light effect model based on the light effect intensity coefficient and obtaining the target light effect model based on the reference light effect model and the light effect intensity coefficient.

The present disclosure further provides an electronic device, including a memory and a processor; wherein the memory stores a computer program; when the computer program is executed by the processor, the processor performs an image processing method as described above.

The present disclosure further provides a computer-readable storage medium, storing a computer program, wherein when the computer program is executed by a processor, the processor performs operations of an image processing method as described above.

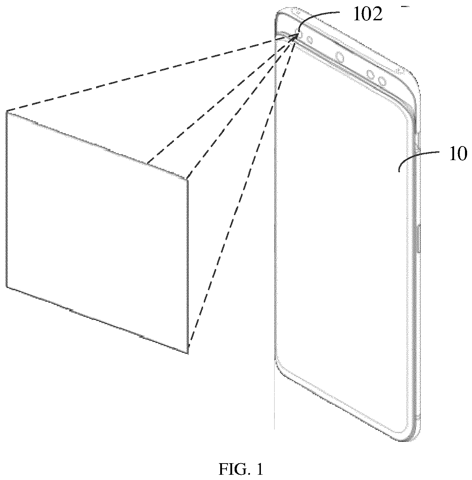

FIG. 1 is a schematic view of an application environment of an image processing method according to an embodiment of the present disclosure. As shown in FIG. 1, the application environment includes an electronic device 10. The electronic device 10 may collect an image to be processed through a camera 102 arranged on the electronic device 10, may detect a face region of the collected image to be processed, and further detect an overexposed region in the face region. The electronic device 10 may obtain a light effect intensity coefficient based on the overexposed region, and obtain a target light effect model based on the light effect intensity coefficient. The electronic device 10 may perform a light effect enhancement processing on the image to be processed based on the target light effect model. In some embodiments, the electronic device 10 may be a personal computer, a mobile terminal, a personal digital assistant, a wearable electronic device, etc., and is not limited thereto.

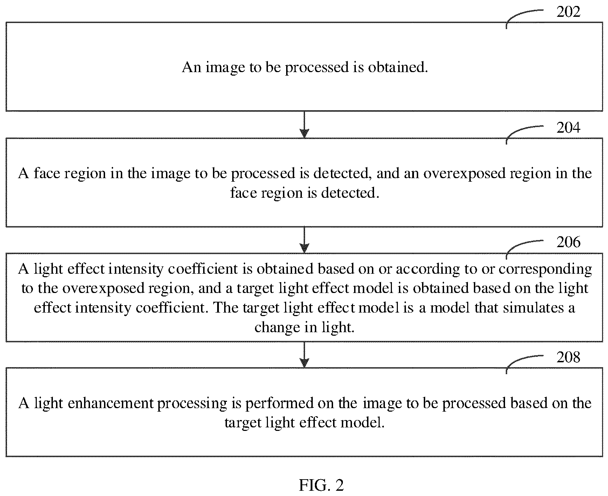

FIG. 2 is a flow chart of an image processing method according to an embodiment of the present disclosure. As shown in FIG. 2, the image processing method includes operations 202 to 208.

In operation 202, an image to be processed is obtained.

In some embodiments, the image to be processed refers to an image required to be light enhancement processed. Specifically, the image to be processed may be a two-dimensional matrix including a plurality of pixels. Each pixel may have a corresponding pixel value. Different patterns are thus formed via an arrangement of the pixels with different pixel values. The resolution of the image to be processed may be expressed by the number of pixels arranged horizontally and that of pixels arranged vertically. For example, the resolution of the image to be processed may be $640 \times 320$, which means that the image to be processed is arranged with 640 pixels in each horizontal direction and 320 pixels in each longitudinal direction.

Specifically, the manner in which the electronic device obtains the image to be processed is not limited. For example, the electronic device may directly capture the image to be processed through the arranged camera, or receive the image to be processed sent by other electronic devices, or download the image to be processed from web pages, or directly find or look up the image to be processed from images stored locally in the electronic device, etc., which is not limited herein.

In operation 204, a face region in the image to be processed is detected, and an overexposed region in the face region is detected.

After the image to be processed is obtained, a face detection may be performed on the image to be processed to extract a face region in the image to be processed. The face region refers to a region in which a face is located, and may be represented by a minimum rectangular region including the face region, or represented by a region included in a face contour, which is not limited herein.

The detecting the face region in the image to be processed may be implemented by any face detection algorithm. For example, the face detection algorithm may be an adaptive boosting (AdaBoost) algorithm, a single shot multibox detector (SSD) algorithm, or a convolutional neural networks (CNN) algorithm, which is not limited herein.

After the face region is detected, the electronic device may detect the overexposed region in the face region. The overexposed region refers to a region in which exposing is over-intensive. Generally, a pixel may be detected whether to be overexposed based on the brightness of the pixel. For example, the electronic device may obtain the brightness of each pixel in the face region and obtain a region including or formed by pixels with a brightness greater than a certain value, and the region formed by the pixels with the brightness greater than the certain value is the overexposed region.

In operation 206, a light effect intensity coefficient is obtained based on or according to or corresponding to the overexposed region, and a target light effect model is obtained based on the light effect intensity coefficient. The target light effect model is a model that simulates a change in light.

When a light effect enhancement processing is performed on the image to be processed, the color, brightness, or the like, of the pixels in the image to be processed may be changed. Assuming that there is an overexposed region in the image to be processed, when the light effect enhancement processing is performed on the image to be processed, severe distortion may occur in the overexposed region. Therefore, the electronic device is required to first detect the overexposed region in the face region, and then adjust the light effect intensity coefficient for performing the light enhancement processing based on the overexposed region.

The target light effect model is a model that simulates changes in light, and the light effect enhancement processing can be performed on the image to be processed via the target light effect model. The light enhancement processing refers to the process of adding light effects to an image. Specifically, the target light effect model can simulate changes in the directions, intensities, and colors of light. The electronic device can add light in different directions, strengths, and colors to the image to be processed via the target light effect model. For example, the target light effect model can simulate the light changes produced by incandescent lights, and can also simulate the light changes of tungsten filament lights. The light colors produced by the incandescent lights are blue, and the light colors produced by the tungsten lights are yellow.

In some embodiments, after the overexposed region is detected, the intensity of the light effect enhancement processing may be adjusted according to or based on the overexposed region. Specifically, the electronic device may obtain the brightness of the overexposed region, adjust the light effect intensity coefficient of the target light effect model based on the brightness of the overexposed region, and perform the light effect enhancement processing based on the target light effect model. For example, the greater the brightness of the overexposed region, the less the light intensity coefficient obtained, and the less the intensity of the light effect enhancement process.

In operation 208, a light enhancement processing is performed on the image to be processed based on the target light effect model.

In some embodiments, the target light effect model may be a model for performing the light enhancement processing on a partial region in the image to be processed, or a model for performing the light enhancement processing on the entire region in the image to be processed, which is not limited herein. For example, the electronic device may only perform the light effect enhancement processing on the face region in the image to be processed via the target light effect model, or may perform the light effect enhancement processing on the entire image to be processed via the target light effect model.

Specifically, the image to be processed may be a two-dimensional matrix including a plurality of pixels. Each pixel may have a corresponding pixel value. Therefore, after the electronic device obtains the target light effect model, a light effect enhancement parameter of each pixel in the image to be processed may be calculated based on the target light effect model. After the electronic device calculates the light effect enhancement parameter, the light effect enhancement process may be performed on each pixel point in the image to be processed based on the light effect enhancement parameter. Specifically, the electronic device may perform the light effect enhancement processing by superimposing or multiplying the image to be processed by utilizing the light effect enhancement parameter, which is not limited herein. It can be understood that the range of the pixel value in an image is generally [0,255], so the pixel value of the image to be processed after the light effect enhancement processing cannot be greater than 255.

For example, assuming that the image to be processed is $H_0 (x, y)$ and the target light effect model is $P (x, y)$, the image $H (x, y)$ after the light effect enhancement processing is performed by superimposing can be expressed as $H (x, y) = (1+P (x, y)) H_0 (x, y)$. The image after the light effect enhancement processing is performed by multiplying can be expressed as $H (x, y) = P (x, y) H_0 (x, y)$. It can be understood that the light effect enhancement processing may also be implemented in other ways, which is not limited herein.

In some embodiments, when performing the light effect enhancement processing on the image to be processed, the electronic device may also perform different processing on each color channel in the image to be processed. Specifically, each pixel in the image to be processed may correspond to one or more color channel values. The electronic device may obtain by calculating the light effect enhancement parameter of the color channel value corresponding to each pixel based on the obtained target light effect model, and perform the light enhancement processing on the one or more color channel values of each pixel based on corresponding light effect enhancement parameter respectively. For example, the image to be processed corresponds to four color channels, the target light effect model includes four light effect sub-models, and each light effect sub-model corresponds to one color channel. In this case, the electronic device may calculate the light effect enhancement parameter of the color channel value corresponding to the image to be processed based on the light effect sub-models, and perform the light enhancement processing on the channel values based on corresponding light effect enhancement parameter.

It can be understood that after the electronic device performs different light effect enhancement processing on different color channel values, the obtained light effect enhancement effect of the image may be the same. For example, among the light effect enhancement parameters corresponding to three channels including a red (R) channel, /a green (G) channel, /and a blue (B) channel obtained by the electronic device, the light effect enhancement parameter corresponding to the R channel are greater than the light effect enhancement parameters of the G channel and the B channel. In this case, after the electronic device performs the light enhancement processing on the image to be processed based on the light effect enhancement parameters, a light effect enhanced image with an effect of reddish light compared to the image to be processed may be obtained.

In the image processing method described in the above embodiments, a face region in the image to be processed is detected, and an overexposed region in the face region is detected. A light effect intensity coefficient is obtained based on the overexposed region, and a target light effect model is obtained based on the light effect intensity coefficient. A light enhancement processing is performed on the image to be processed based on the target light effect model. After the overexposed region of the face region is detected, the intensity of the light effect enhancement processing is adjusted based on the overexposed region, such that the distortion of the face region caused by the light effect enhancement processing may not occur, and the accuracy of image processing may be improved.

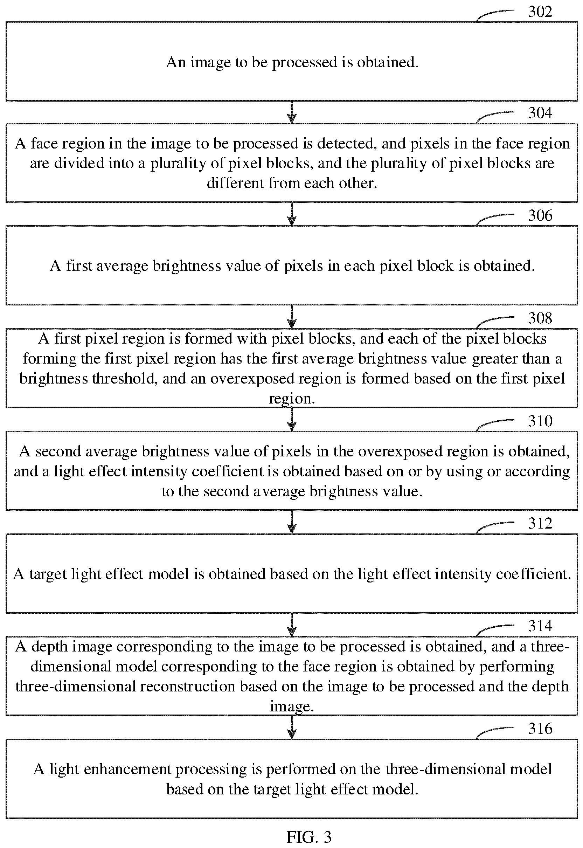

FIG. 3 is a flow chart of an image processing method according to an embodiment of the present disclosure. As shown in FIG. 3, the image processing method includes operations 302 to 316.

In operation 302, an image to be processed is obtained.

In the embodiment, the light effect enhancement processing of the image to be processed may be automatically triggered by the electronic device or manually triggered by a user, which is not limited herein. For example, when the electronic device captures an image, the user can manually select whether to perform light enhancement processing on the captured image. When the user clicks a button for the light enhancement processing, the electronic device configures the captured image as the image to be processed and performs the light enhancement processing on the image to be processed.

In operation 304, a face region in the image to be processed is detected, and pixels in the face region are divided into a plurality of pixel blocks, and the plurality of pixel blocks are different from each other.

The image to be processed may be a two-dimensional matrix including a plurality of pixels, so the detected face region also includes multiple pixels. After the electronic device detects the face region in the image to be processed, the electronic device may divide the pixels in the detected face region into different pixel blocks, separately obtain brightness values of the pixel blocks, and determine whether there is an overexposing based on the obtained brightness values.

It can be understood that the size of the pixel block is not limited here. The size of the pixel block may be expressed by $m \times n$. The size of $m \times n$ indicates that there are m pixels in each horizontal direction in the pixel block, and n pixels in each vertical direction in the pixel block. The number of pixels in the horizontal direction and that of pixels in the vertical direction in the pixel block may be the same or different, which is not limited herein. For example, the pixel block may be $16 \times 16$ in size or $10 \times 4$ in size.

In operation 306, a first average brightness value of pixels in each pixel block is obtained.

After the electronic device divides the face region into the different pixel blocks, each pixel block contains multiple pixels, and each pixel corresponds to a brightness value. The electronic device may obtain, for example, by means of counting and calculating, an average value of the brightness values of all the pixels in each pixel block as the first average brightness value. Therefore, each pixel block corresponds to a first average brightness value. The electronic device may determine the overexposed region based on the obtained first average brightness value.

In some embodiments, assuming that the pixel block is $16 \times 16$ in size, the electronic device may predefine a $16 \times 16$ in-size rectangular frame, and traverse the face region by using the $16 \times 16$ in-size rectangular frame. The specific traversal process is as follows. The electronic device defines a starting position in the face region, and places the rectangular frame at the starting position. The pixels in the rectangular frame thus form a pixel block, and the first average brightness value corresponding to the pixel block is obtained through counting and calculating. Then the rectangle frame is moved to a different position each time, and each time the pixels in the moved rectangle frame form a pixel block. In this way, the first average brightness value of each pixel block formed each time may be obtained.

In operation 308, a first pixel region is formed with pixel blocks, and each of the pixel blocks forming the first pixel region has the first average brightness value greater than a brightness threshold, and an overexposed region is formed based on the first pixel region.

After the electronic device obtains the first average brightness values corresponding to each pixel block, the electronic device obtains the pixel blocks with the first average brightness value greater than the brightness threshold, and forms the first pixel region by utilizing the obtained pixel blocks. Pixels with excessively high brightness values may be caused by overexposure. Therefore, the electronic device may obtain an overexposed region based on the pixel blocks with the first average brightness value greater than the brightness threshold.

In operation 310, a second average brightness value of pixels in the overexposed region is obtained, and a light effect intensity coefficient is obtained based on or by using or according to the second average brightness value.

After the electronic device determines the overexposed region, the electronic device may obtain the average value of the brightness values of all the pixels in the overexposed region to obtain the second average brightness value, and then obtain the light effect intensity coefficient based on the second average brightness value. Generally, the greater the second average brightness value, the less the light effect intensity coefficient, and the weaker the intensity of the corresponding light effect enhancement process.

Specifically, when the electronic device obtains the second average brightness value of the pixels in the overexposed region, the brightness values of all pixels in the overexposed region may be superimposed, the number of pixels in the overexposed region is counted, and then the sum of the brightness values is divided by the number of pixels to obtain the second average brightness value. For example, when the overexposed region includes 4 pixels and the brightness values are 201, 186, 158, and 165 respectively, the second average brightness value is then (203+186+158+165)/4 = 178.

In some embodiments, the operation of obtaining the light effect intensity coefficient may include: obtaining the light effect intensity coefficient based on the second average brightness value and the brightness threshold. Specifically, the light effect intensity coefficient may be obtained based on a ratio of the brightness threshold to the second average brightness value. Assuming that the second average brightness value is $V_2$ and the brightness threshold is T, then the obtained light efficiency intensity coefficient is $r = T/V_2$.

For example, the brightness threshold may be T = 240. After obtaining the first average brightness values $V_1$ of the pixel blocks, the electronic device may form the first pixel region by or with the pixel blocks of which first average brightness value $V_1$ is greater than 240, and then obtain the overexposed region based on the first pixel region. Further, the electronic device obtains the second average brightness value $V_2$ of the overexposed region, and obtains the light efficiency intensity coefficient $r = 240 / V_2$ based on the second average brightness value and the brightness threshold.

In operation 312, a target light effect model is obtained based on the light effect intensity coefficient.

In the embodiment provided by the present disclosure, the electronic device may preset a reference light effect model. The reference light effect model may simulate changes in light, and may specifically simulate changes in light color, direction, intensity, etc. After the electronic device obtains the light effect intensity coefficient, the light effect intensity of the reference light effect model may be adjusted based on the light effect intensity coefficient, thereby obtaining the target light effect model.

For example, assuming that the reference light effect model is $P_0(x, y)$, the light effect intensity coefficient is r, and the obtained target light effect model is $P(x, y)$, then the formula for the target light effect model obtained by the electronic device based on the reference light effect model and the light effect intensity coefficient may be expressed as: $P(x, y) = r \times P_0(x, y)$.

In operation 314, a depth image corresponding to the image to be processed is obtained, and a three-dimensional model corresponding to the face region is obtained by performing three-dimensional reconstruction based on the image to be processed and the depth image.

In some embodiments, after obtaining the target light effect model, the electronic device may process a two-dimensional image or a three-dimensional model, which is not limited herein. The image to be processed is a two-dimensional image. After obtaining the target light effect model, the electronic device may directly process the image to be processed, or may process the three-dimensional model obtained by performing the three-dimensional reconstruction based on the image to be processed.

When the electronic device processes the three-dimensional model, the electronic device is required to perform three-dimensional modeling based on the image to be processed to obtain the three-dimensional model. Specifically, the electronic device obtains the depth image corresponding to the image to be processed, and then performs the three-dimensional reconstruction based on the image to be processed and the depth image. The image to be processed may be configured to represent information such as the color and texture of an object. The depth image may be configured to represent the distance between the object and an image obtaining device.

The electronic device may perform the three-dimensional modeling on the face region based on the image to be processed and the depth image, and obtain the three-dimensional model corresponding to the face region. Specifically, the three-dimensional model may be configured to represent a polygonal three-dimensional structure of the object. The three-dimensional model may generally be represented by a three-dimensional mesh (3D mesh) structure, and the mesh comprises or is even composed of point cloud data of the object. The point cloud data may generally include three-dimensional coordinate (XYZ), laser reflection intensity, and color information (RGB). Finally, the three-dimensional mesh is drawn based on the point cloud data.

In operation 316, a light enhancement processing is performed on the three-dimensional model based on the target light effect model.

It can be understood that when the electronic device performs the light effect enhancement processing on the three-dimensional model, the target light effect model obtained is also a model to perform the light effect enhancement processing on the three-dimensional model. The preset reference light effect model is also a model to perform the light effect enhancement processing on the three-dimensional model. That is, the target light effect model is a model that simulates the change of light in three-dimensional space. After the electronic device obtains the three-dimensional model, the light effect enhancement processing may be performed on the three-dimensional model based on the target light effect model.

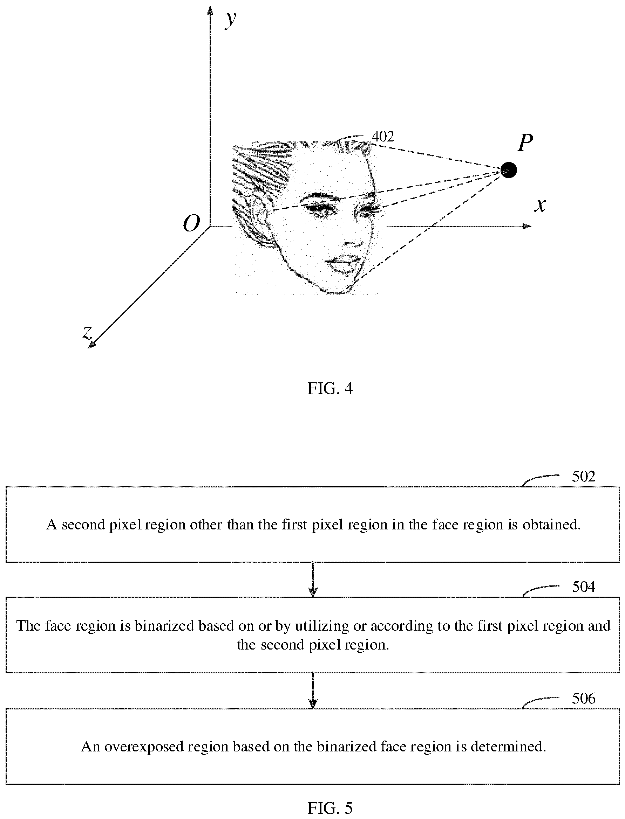

FIG. 4 is a schematic view of performing a light effect enhancement process on a three-dimensional model according to an embodiment of the present disclosure. As shown in FIG. 4, the electronic device performs the three-dimensional reconstruction on the face region to obtain a three-dimensional model 402. The obtained three-dimensional model 402 may be represented in a spatial three-dimensional coordinate system xyz. The target light effect model applied by the electronic device for performing the light effect enhancement processing on the three-dimensional model 402 can simulate the change of light in the three-dimensional space. Specifically, the target light effect model may be represented in the three-dimensional space coordinate system xyz, that is, represented as a variation curve of the light generated by a light source center P in the spatial three-dimensional coordinate system xyz.

In some embodiment, as shown in FIG. 5, the determining the overexposed region may include the following operations.

In operation 502, a second pixel region other than the first pixel region in the face region is obtained. That is to say, the face region consists of the first pixel region and the second pixel region.

The electronic device forms the first pixel region based on the pixel blocks of which the first average brightness value is greater than the brightness threshold in the face region, configures the region other than the first pixel region in the face region as the second pixel region, and determines the overexposed region based on the first pixel region and the second pixel region.

In operation 504, the face region is binarized based on or by utilizing or according to the first pixel region and the second pixel region.

After the electronic device determines the first pixel region and the second pixel region, the electronic device performs a binarization process based on the first pixel region and the second pixel region. For example, when the electronic device sets all the brightness values of the pixels in the first pixel region to 1 and all the brightness values of the pixels in the second pixel region to 0, the face region can be binarized.

In operation 506, an overexposed region based on the binarized face region is determined.

The binarized face region may be more easily distinguished from the first pixel region and the second pixel region. The electronic device determines the overexposed region based on the binarized face region. Specifically, since the first pixel region is a region including pixel blocks with higher brightness values, the first pixel region is considered to be more likely to be the overexposed region. The electronic device may compare the area of the first pixel region. When the area of the first pixel region is small, the first pixel region may be considered to be less likely to be the overexposed region. When the area of the first pixel region is large, the first pixel region may be considered to be more likely to be the overexposed region. In this way, the overexposed region may be formed based on the first pixel region with a larger area.

The electronic device may set the brightness values of all the pixels in the first pixel region to non-zero brightness values and sets the brightness values of all the pixels in the second pixel region to 0 to binarize the face region. The binarized face region thus obtained includes one or more connected regions. The electronic device may determine the overexposed region based on the area of the one or more connected regions.

Specifically, the electronic device obtains the connected regions in the binarized face region, obtains an area ratio of each connected region to the face region, and forms the overexposed region based on the connected regions of which the area ratio is greater than an area threshold. The area may be represented by the number of pixels included. The area of one connected region is the number of pixels contained in the connected region, and the area of the face region is the number of pixels contained in the face region. After the electronic device obtains the area of each connected region in the face region, the electronic device may obtain the area ratio of each connected region to the face region, and then determine the overexposed region based on the obtained area ratio.

In some embodiments, the electronic device may further perform a process of expanding and corroding the binarized face region, then obtain the connected regions in the face region after the process of expanding and corroding, obtain the area ratio of each connected region to the face region, and forms the overexposed region based on the connected regions with the area ratio greater than the area threshold. For example, the area of a connected region is S1, and the area of the face region is S2. Assuming that the ratio of the area of the connected region to that of the face region S1/S2 is greater than 0.1, the electronic device marks the connected region and finally forms the overexposed region based on the marked connected region.

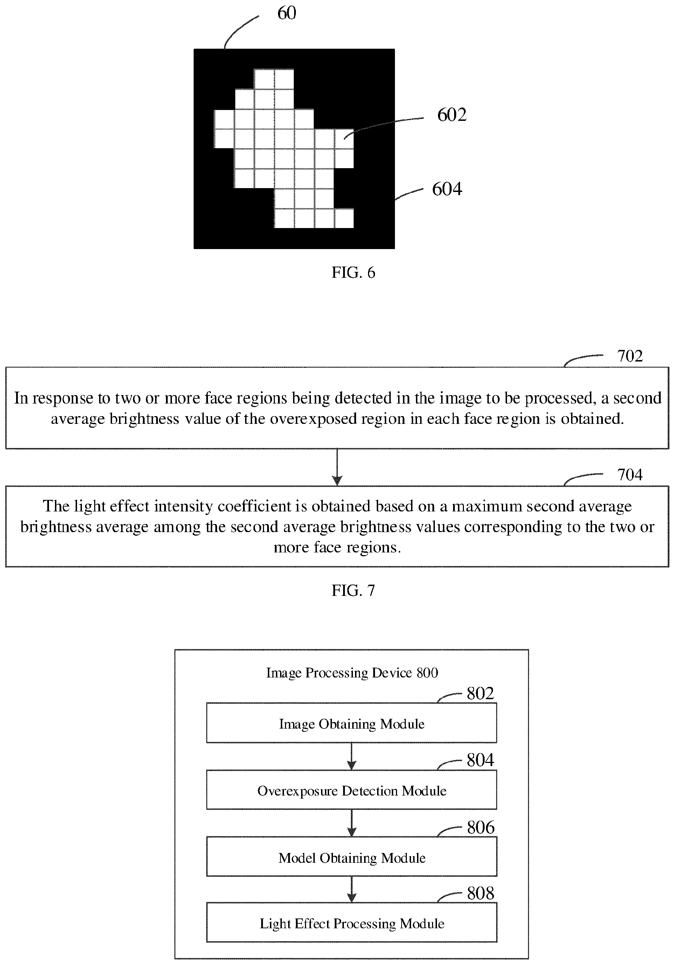

FIG. 6 is a schematic view of a connected region according to an embodiment of the present disclosure. As shown in FIG. 6, the face region may be binarized.

For example, the brightness values of all pixels in the first pixel region are set to 255, and the brightness values of all pixels in the second pixel region are set to 0. The binarized face region 60 is thus obtained. The binarized face region 60 may include a connected region 602 and a non-connected region 604.

In some embodiments provided in the present disclosure, as shown in FIG. 7, the obtaining the light effect intensity coefficient may include the following operations.

In operation 702, in response to two or more face regions being detected in the image to be processed, a second average brightness value of the overexposed region in each face region is obtained.

Specifically, when two or more face regions are detected in the image to be processed, the electronic device may detect the overexposed region in each face region separately, and obtain the second average brightness value of the overexposed region in each face region to obtain the light effect intensity coefficient based on the second average brightness value.

In operation 704, the light effect intensity coefficient is obtained based on a maximum second average brightness average among the second average brightness values corresponding to the two or more face regions.

When the electronic device detects that there are two or more face regions, the electronic device may obtain the light effect intensity coefficient based on the face region with higher brightness. Specifically, the electronic device may obtain a maximum value of the second average brightness value corresponding to each face region obtained by statistics, and then obtain the light effect intensity coefficient based on the maximum average brightness value. For example, in case that the image to be processed includes two face regions, the second average brightness value corresponding to a face region A is 241, and the second average brightness value corresponding to the other face region B is 246, then, the electronic device may calculate the light effect intensity coefficient based on the second average brightness value 246 corresponding to the face region B.

In the image processing method provided in the above embodiments, the face region in the image to be processed may be detected, and the overexposed region in the face region may be detected. The light effect intensity coefficient is obtained based on the overexposed region, and the target light effect model is obtained based on the light effect intensity coefficient. Finally, three-dimensional modeling is performed based on the image to be processed and the corresponding depth image. The light effect enhancement processing is performed on the three-dimensional model based on the target light effect model. After the overexposed region of the face region is detected, the intensity of the light effect enhancement processing may be adjusted based on the overexposed region, such that the distortion of the face region caused by the light effect enhancement processing may be limited, improving the accuracy of image processing.

It should be understood that although the operations in the flowcharts of FIGS. 2, 3, 5, and 7 are sequentially displayed in accordance with the directions of the arrows, these operations are not necessarily performed in the order indicated by the arrows. Unless explicitly stated in the present disclosure, the execution of these operations is not strictly limited, and these operations can be performed in other orders. Moreover, at least a part of the operations in FIGS. 2, 3, 5, and 7 may include multiple sub-operations or multiple stages. The sub-operations or stages are not necessarily performed at the same time, but may be performed at different times. The execution order of the sub-operations or stages is not necessarily sequential, but may be performed in turn or alternately with other operations or at least a part of the sub-operations or stages of other operations.

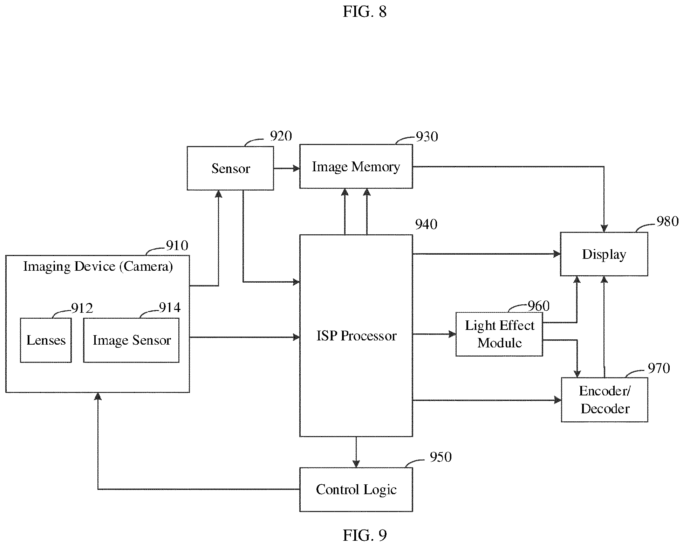

FIG. 8 is a block diagram of an image processing device according to an embodiment of the present disclosure. As shown in FIG. 8, an image processing device 800 includes an image obtaining module 802, an overexposure detection module 804, a model obtaining module 806, and a light effect processing module 808.

The image obtaining module 802 is configured to obtain an image to be processed.

The overexposure detection module 804 is configured to detect a face region in the image to be processed, and detect an overexposed region in the face region.

The model obtaining module 806 is configured to obtain a light effect intensity coefficient based on the overexposed region, and obtain a target light effect model based on the light effect intensity coefficient. The target light effect model is a model that simulates a change in light.

The light effect processing module 808 is configured to perform light effect enhancement processing on the image to be processed based on the target light effect model.

In the image processing device provided in the embodiments, the face region in the image to be processed may be detected, and the overexposed region in the face region may be detected. The light effect intensity coefficient is obtained based on the overexposed region, and the target light effect model is obtained based on the light effect intensity coefficient. Finally, the light effect enhancement processing is performed on the image to be processed based on the target light effect model. After the overexposed region of the face region is detected, the intensity of the light effect enhancement processing may be adjusted based on the overexposed region, such that the distortion of the face region caused by the light effect enhancement processing may be limited, improving the accuracy of image processing.

In some embodiments, the overexposure detection module 804 is further configured to divide pixels in the face region into a plurality of pixel blocks, the plurality of pixel blocks being different from each other; obtain first average brightness value of pixels in each pixel blocks; form a first pixel region with pixel blocks, each of the pixel blocks forming the first pixel region having the first average brightness value greater than a brightness threshold; and form an overexposed region based on the first pixel region.

In some embodiments, the overexposure detection module 804 is further configured to obtain a second pixel region other than the first pixel region in the face region; binarize the face region based on or by utilizing or according to the first pixel region and the second pixel region; and determine the overexposed region based on the binarized face region. The face region consists of the first pixel region and the second pixel region.

In some embodiments, the overexposure detection module 804 is further configured to obtain connected regions in the binarized face region, and obtain an area ratio of each connected region to the face region; and form the overexposed region based on the connected regions with the area ratio greater than an area threshold.

In some embodiments, the model obtaining module 806 is further configured to count a second average brightness value of pixels in the overexposed region, and obtain the light efficiency intensity coefficient based on or by using or according to the second average brightness value.

In some embodiments, the model obtaining module 806 is further configured to, in response to two or more face regions being detected in the image to be processed, obtain a second average brightness value of the overexposed region in each face region; and obtain the light effect intensity coefficient based on a maximum second average brightness average among the second average brightness values corresponding to the two or more face regions.

In some embodiments, the light effect processing module 808 is further configured to obtain a depth image corresponding to the image to be processed, perform three-dimensional reconstruction based on the image to be processed and the depth image, obtain a three-dimensional model corresponding to the face region; and perform light enhancement processing on the image to be processed based on the target light effect model.

The division of each module in the above image processing device is for illustration only. In other embodiments, the image processing device may be divided into different modules as needed to complete all or part of the functions of the above image processing device.

For the specific limitation of the image processing device, reference may be made to the foregoing description on the image processing method, and details are not described herein again. Each module in the above image processing device may be implemented in whole or in part by software, hardware, and a combination thereof. The above-mentioned modules may be embedded in the hardware form or independent of the processor in the computer device, or may be stored in the memory of the computer device in the form of software, so that the processor calls and performs the operations corresponding to the above modules.

The implementation of each module in the image processing device provided in the embodiments of the present disclosure may be in the form of a computer program. The computer program can be run on a terminal or a server. The program module constituted by the computer program can be stored in the memory of a terminal or a server. When the computer program is executed by a processor, the operations of the method described in the embodiments of the present disclosure are implemented.

An embodiment of the present disclosure further provides an electronic device. The electronic device includes an image processing circuit. The image processing circuit may be implemented by hardware and/or software components, and may include various processing units that define an image signal processing (ISP) pipeline. FIG. 9 is a block diagram of an image processing circuit according to an embodiment of the present disclosure. As shown in FIG. 9, for ease of description, only aspects of the image processing technology related to the embodiments of the present disclosure are shown.

As shown in FIG. 9, the image processing circuit includes an ISP processor 940 and a control logic 950. An image data captured by an imaging device 910 is first processed by the ISP processor 940. The ISP processor 940 analyzes the image data to capture image statistical information configured to determine one or more control parameters of the imaging device 910. The imaging device 910 may include a camera including one or more lenses 912 and an image sensor 914. The image sensor 914 may include a color filter array (such as a Bayer filter). The image sensor 914 may obtain light intensity and wavelength information captured by each imaging pixel of the image sensor 914, and provide a set of raw image data that can be processed by the ISP processor 940. A sensor 920 (such as a gyroscope) may provide processing parameters (such as image stabilization parameters) of the obtained image to the ISP processor 940 based on the interface type of the sensor 920. The sensor 920 may be configured with a standard mobile imaging architecture (SMIA) interface, other serial or parallel camera interfaces, or a combination of the foregoing interfaces.

In addition, the image sensor 914 may also send the raw image data to the sensor 920. The sensor 920 may provide the raw image data to the ISP processor 940 for processing based on the interface type of the sensor 920, or the sensor 920 stores the raw image data in an image memory 930.

The ISP processor 940 processes the raw image data pixel by pixel in a variety of formats. For example, each image pixel may have a bit depth of 8, 10, 12, or 14 bits. The ISP processor 940 may perform one or more image processing operations on the raw image data and collect statistical information about the image data. The image processing operations may be performed with a same or different bit depth accuracy.

The ISP processor 940 may also receive pixel data from the image memory 930. For example, the sensor 920 sends the raw image data to the image memory 930. The raw image data in the image memory 930 is then provided to the ISP processor 940 for processing. The image memory 930 may be a part of a memory device, a storage device, or a separate dedicated memory in the electronic device, and may include a direct memory access (DMA) feature.

When the raw image data from the image sensor 914 or from the sensor 920 or from the image memory 930 is received, the ISP processor 940 may perform one or more image processing operations, such as time-domain filtering. The image data processed by the ISP processor 940 may be sent to the image memory 930 for further processing before being displayed. The ISP processor 940 receives processing data from the image memory 930 and performs image data processing on the processing data in an original domain and in the RGB and YCbCr color spaces. The processed image data may be output to the display 980 for being viewed by a user and/or further processed by a graphics engine or a graphics processing unit (GPU). In addition, the output of the ISP processor 940 may also be sent to the image memory 930, and the display 980 may read the image data from the image memory 930. In some embodiments, the image memory 930 may be configured to implement one or more frame buffers. In addition, the output of the ISP processor 940 may be sent to an encoder/decoder 970 to encode/decode the image data. The encoded image data may be saved and decompressed before being displayed on a display 980.

The image data processed by the ISP may be sent to a light effect module 960 to perform light effect processing on the image before being displayed. The light effect processing performed by the light effect module 960 on the image data may include obtaining a light effect enhancement parameter of each pixel in the image to be processed, and performing light effect enhancement processing on the image to be processed based on the light effect enhancement parameter. After the light effect module 960 performs the light effect enhancement processing on the image data, the image data after the light effect enhancement processing may be sent to the encoder/decoder 970 to encode/decode the image data. The encoded image data may be saved and decompressed before being displayed on the display 980. It can be understood that the image data processed by the light effect module 960 may be directly sent to the display 980 for display without being sent to the encoder/decoder 970. The image data processed by the ISP processor 940 may also be processed by the encoder/decoder 970 first, and then processed by the light effect module 960. The light effect module 960 or the encoder/decoder 970 may be a central processing unit (CPU) or a GPU in a mobile terminal.

The statistical data determined by the ISP processor 940 may be sent to a control logic 950 unit. For example, the statistical data may include statistical information of the image sensor 914 such as auto exposure, auto white balance, auto focus, flicker detection, black level compensation, and shading correction of the lens 912. The control logic 950 may include a processor and/or a microcontroller that executes one or more routines (such as firmware). The one or more routines may determine the control parameters of the imaging device 910 and the control parameters of the ISP processor 940 based on the received statistical data. For example, the control parameters of the imaging device 910 may include control parameters of the sensor 920 (such as gain, integration time for exposure control, image stabilization parameters, etc.), control parameters, lens 912 control parameters for flash of a camera (such as focal length for focus or zoom), or combinations of the parameters. ISP control parameters may include gain levels and color correction matrices for automatic white balance and color adjustment (e.g., during RGB processing), and the parameters for correcting the shading of the lens 912.

The following is an operation of implementing the image processing method provided by the foregoing embodiments by the image processing technology in FIG. 9.

An embodiment of the present disclosure further provides a computer-readable storage medium, specifically, one or more non-transitory computer-readable storage media storing computer-executable instructions. When the computer-executable instructions are executed by one or more processors, the operations of the method described in the embodiments of the present disclosure are implemented.

An embodiment of the present disclosure further provides a computer program product containing instructions. When the computer program product runs on a computer, the operations of the method described in the embodiments of the present disclosure are implemented.

Any reference to memory, storage, database, or other media mentioned in the present disclosure may include a non-transitory and/or a transitory memory. The non-transitory memory may include a read-only memory (ROM), a programmable ROM (PROM), an electrically programmable ROM (EPROM), an electrically erasable programmable ROM (EEPROM), or a flash memory. The transitory memory may include a random access memory (RAM), which is used as external cache memory. By way of illustration and not limitation, the RAM is available in various forms, such as a static RAM (SRAM), a dynamic RAM (DRAM), a synchronous DRAM (SDRAM), a dual data rate SDRAM (DDR SDRAM), an enhanced SDRAM (ESDRAM), a synchronous Link (Synchlink) DRAM (SLDRAM), a memory bus (Rambus) direct RAM (RDRAM), a direct memory bus dynamic RAM (DRDRAM), and a memory bus dynamic RAM (RDRAM).

The above embodiments are only to describe some implantations the present disclosure which are descried in specific and detailed ways. However, it cannot be interpreted as a limitation to the scope of the present disclosure. Therefore, the protection scope of the present disclosure shall be subject to the appended claims.

## Claims

1. An image processing method, comprising:

obtaining (202, 302) an image to be processed;
detecting (204) one or more face regions in the image to be processed, and detecting an overexposed region in each of the one or more face regions;
for each of the one or more face regions:

obtaining (206) a light effect intensity coefficient based on the overexposed region, and obtaining (206, 312) a target light effect model based on the light effect intensity coefficient, the target light effect model being a model that simulates a change in light; and performing (208) light enhancement processing on the image to be processed via the target light effect model;
**characterized in that** the image processing method further comprises:

presetting a reference light effect model, the reference light effect model being configured to simulate a change in light;
the obtaining (206) the light effect intensity coefficient based on the overexposed region comprises:

obtaining (310) a second average brightness value of pixels in the overexposed region; and
obtaining (310) the light effect intensity coefficient based on the second average brightness value;
the obtaining (206, 312) the target light effect model based on the light effect intensity coefficient comprises:
adjusting the reference light effect model based on the light effect intensity coefficient to obtain the target light effect model.

2. The method according to claim 1, wherein the detecting (204) the one or more face regions in the image to be processed comprises:

dividing (304) pixels in each of the one or more face regions into a plurality of pixel blocks, the plurality of pixel blocks being different from each other;
obtaining (306) a first average brightness value of pixels in each of the plurality of pixel blocks;
forming (308) a first pixel region with pixel blocks, wherein each of the pixel blocks forming the first pixel region has the first average brightness value greater than a brightness threshold; and
forming (308) the overexposed region based on the first pixel region.

3. The method according to claim 2, wherein the forming (308) the overexposed region based on the first pixel region comprises:
for each of the one or more face regions:

obtaining (502) a second pixel region in the face region, wherein the face region consists of the first pixel region and the second pixel region;
binarizing (504) the face region based on the first pixel region and the second pixel region; and
determining (506) the overexposed region based on the binarized face region.

4. The method according to claim 3, wherein the binarizing (504) the face region based on the first pixel region and the second pixel region comprises:

configuring brightness values of pixels in the first pixel region to a non-zero brightness value; and
configuring brightness values of pixels in the second pixel region to zero.

5. The method according to claim 3, wherein the determining (506) the overexposed region based on the binarized face region comprises:

obtaining a connected region in the binarized face region;
obtaining an area ratio of the connected region to the face region; and
forming the overexposed region based on the connected region of which the area ratio is greater than an area threshold.

6. The method according to claim 5, wherein the obtaining the connected region in the binarized face region comprises:

obtaining the binarized face region;
performing expanding and corroding on the binarized face region sequentially; and
obtaining the connected region in the binarized face region after the expanding and corroding.

7. The method according to claim 1, wherein the obtaining (310) the light effect intensity coefficient based on the second average brightness value comprises:

   obtaining the brightness threshold for forming the overexposed region; and
   configuring a ratio of the brightness threshold to the second average brightness value as the light effect intensity coefficient.

8. The method according to claim 1, wherein the obtaining (310) the second average brightness value of pixels in the overexposed region and obtaining (310) the light effect intensity coefficient based on the second average brightness value comprise:

   in response to two or more face regions being detected in the image to be processed, obtaining (702) the second average brightness value of the overexposed region in each face region; and obtaining (704) the light effect intensity coefficient based on a maximum second average brightness average among the second average brightness values corresponding to the two or more face regions.

9. The method according to claim 1, wherein the performing (208) light enhancement processing on the image to be processed based on the target light effect model comprises:

   obtaining a light effect enhancement parameter of a color channel value corresponding to each pixel in the image to be processed based on the target light effect model; and
   performing the light enhancement processing on the color channel value of each pixel based on the light effect enhancement parameter.

10. The method according to any one of claims 1-9, wherein the performing (208) light enhancement processing on the image to be processed based on the target light effect model comprises:

    obtaining (314) a depth image corresponding to the image to be processed;
    obtaining (314) a three-dimensional model corresponding to the face region by performing three-dimensional reconstruction based on the image to be processed and the depth image; and
    performing (316) the light enhancement processing on the three-dimensional model based on the target light effect model.

11. The method according to any one of claims 1-9, wherein the performing (208) light enhancement processing on the image to be processed based on the target light effect model comprises:
adding light in different directions, strengths, and colors to the image to be processed based on the target light effect model.

12. The method according to claim 1, wherein in condition of the reference light effect model being indicated by $P_0$, the light effect intensity coefficient being indicated by r, and the target light effect model being indicated by P, a calculation formula to obtain the target light effect model is:

$$P = r \times P_0.$$

13. An electronic device (10), **characterized by** comprising a memory and a processor; wherein the memory stores a computer program; when the computer program is executed by the processor, the processor performs an image processing method according to any one of claims 1-12.

14. A computer-readable storage medium, storing a computer program, **characterized in that**: when the computer program is executed by a processor, the processor performs operations of the method according to any one of claims 1-12.

**Patentansprüche**

1. Bildverarbeitungsverfahren, umfassend:

   Erlangen (202, 302) eines Bilds, das verarbeitet werden soll;
   Detektieren (204) einer oder mehrerer Gesichtsregionen in dem Bild, das verarbeitet werden soll, und Detektieren einer überbelichteten Region in jeder der einen oder mehreren Gesichtsregionen;
   für jede der einen oder mehreren Gesichtsregionen:

   Erlangen (206) eines Lichteffekt-Intensitätskoeffizienten basierend auf der überbelichteten Region und Erlangen (206, 312) eines Ziel-Lichteffektmodells basierend auf dem Lichteffekt-Intensitätskoeffizienten, wobei das Ziel-Lichteffektmodell ein Modell ist, das eine Veränderung des Lichts simuliert; und
   Durchführen (208) von Lichtverbesserungsverarbeitung an dem Bild, das verarbeitet werden soll, über das Ziel-Lichteffektmodell;
   **dadurch gekennzeichnet, dass** das Bildverarbeitungsverfahren ferner umfasst:

Voreinstellen eines Referenz-Lichteffektmodells, wobei das Referenz-Lichteffektmodell konfiguriert ist zum Simulieren einer Veränderung des Lichts; wobei das Erlangen (206) des Lichteffekt-Intensitätskoeffizienten basierend auf der überbelichteten Region umfasst:

Erlangen (310) eines zweiten durchschnittlichen Helligkeitswerts von Bildpunkten in der überbelichteten Region; und Erlangen (310) des Lichteffekt-Intensitätskoeffizienten basierend auf dem zweiten durchschnittlichen Helligkeitswert; wobei das Erlangen (206, 312) des Ziel-Lichteffektmodells basierend auf dem Lichteffekt-Intensitätskoeffizienten umfasst: Anpassen des Referenz-Lichteffektmodells basierend auf dem Lichteffekt-Intensitätskoeffizienten, um das Ziel-Lichteffektmodell zu erlangen.

2. Verfahren nach Anspruch 1, wobei das Detektieren (204) der einen oder mehreren Gesichtsregionen in dem Bild, das verarbeitet werden soll, umfasst:

Aufteilen (304) von Bildpunkten in jeder der einen oder mehreren Gesichtsregionen in eine Vielzahl von Bildpunktblöcken, wobei die Vielzahl von Bildpunktblöcken voneinander verschieden sind; Erlangen (306) eines ersten durchschnittlichen Helligkeitswerts von Bildpunkten in jedem der Vielzahl von Bildpunktblöcken; Bilden (308) einer ersten Bildpunktregion mit Bildpunktblöcken, wobei jeder der Bildpunktblöcke, die die erste Bildpunktregion bilden, den ersten durchschnittlichen Helligkeitswert aufweist, der größer als ein Helligkeitsschwellenwert ist; und Bilden (308) der überbelichteten Region basierend auf der ersten Bildpunktregion.

3. Verfahren nach Anspruch 2, wobei das Bilden (308) der überbelichteten Region basierend auf der ersten Bildpunktregion umfasst: für jede der einen oder mehreren Gesichtsregionen:

Erlangen (502) einer zweiten Bildpunktregion in der Gesichtsregion, wobei die Gesichtsregion aus der ersten Bildpunktregion und der zweiten Bildpunktregion besteht; Binarisieren (504) der Gesichtsregion basierend auf der ersten Bildpunktregion und der zweiten Bildpunktregion; und Bestimmen (506) der überbelichteten Region basierend auf der binarisierten Gesichtsregion.

4. Verfahren nach Anspruch 3, wobei das Binarisieren (504) der Gesichtsregion basierend auf der ersten Bildpunktregion und der zweiten Bildpunktregion umfasst:

Konfigurieren von Helligkeitswerten von Bildpunkten in der ersten Bildpunktregion zu einem Helligkeitswert ungleich null; und Konfigurieren von Helligkeitswerten von Bildpunkten in der zweiten Bildpunktregion zu null.

5. Verfahren nach Anspruch 3, wobei das Bestimmen (506) der überbelichteten Region basierend auf der binarisierten Gesichtsregion umfasst:

Erlangen einer verbundenen Region in der binarisierten Gesichtsregion; Erlangen eines Flächenverhältnisses der verbundenen Region zu der Gesichtsregion; und Bilden der überbelichteten Region basierend auf der verbundenen Region, deren Flächenverhältnis größer als ein Flächenschwellenwert ist.

6. Verfahren nach Anspruch 5, wobei das Erlangen der verbundenen Region in der binarisierten Gesichtsregion umfasst:

Erlangen der binarisierten Gesichtsregion; Durchführen von Aufweiten und Korrodieren an der binarisierten Gesichtsregion nacheinander; und Erlangen der verbundenen Region in der binarisierten Gesichtsregion nach dem Aufweiten und Korrodieren.

7. Verfahren nach Anspruch 1, wobei das Erlangen (310) des Lichteffekt-Intensitätskoeffizienten basierend auf dem zweiten durchschnittlichen Helligkeitswert umfasst:

Erlangen des Helligkeitsschwellenwerts zum Bilden der überbelichteten Region; und Konfigurieren eines Verhältnisses des Helligkeitsschwellenwerts zu dem zweiten durchschnittlichen Helligkeitswert als den Lichteffekt-Intensitätskoeffizienten.

8. Verfahren nach Anspruch 1, wobei das Erlangen (310) des zweiten durchschnittlichen Helligkeitswerts von Bildpunkten in der überbelichteten Region und Erlangen (310) des Lichteffekt-Intensitätskoeffizienten basierend auf dem zweiten durchschnittlichen Helligkeitswert umfasst:

als Reaktion darauf, dass zwei oder mehr Gesichtsregionen in dem Bild, das verarbeitet werden soll, detektiert werden, Erlangen (702) des zweiten durchschnittlichen Helligkeitswerts der überbelichteten Region in jeder Gesichtsregion; und

Erlangen (704) des Lichteffekt-Intensitätskoeffizienten basierend auf einem maximalen zweiten durchschnittlichen Helligkeitsdurchschnitt unter den zweiten durchschnittlichen Helligkeitswerten, die mit den zwei oder mehr Gesichtsregionen korrespondieren.

9. Verfahren nach Anspruch 1, wobei das Durchführen (208) von Lichtverbesserungsverarbeitung an dem Bild, das verarbeitet werden soll, basierend auf dem Ziel-Lichteffektmodell umfasst:

Erlangen eines Lichteffektverbesserung-Parameters eines Farbkanalwerts korrespondierend mit jedem Bildpunkt in dem Bild, das verarbeitet werden soll, basierend auf dem Ziel-Lichteffektmodell; und
Durchführen der Lichtverbesserungsverarbeitung an dem Farbkanalwert jedes Bildpunkts basierend auf dem Lichteffektverbesserung-Parameter.

10. Verfahren nach einem der Ansprüche 1-9, wobei das Durchführen (208) von Lichtverbesserungsverarbeitung an dem Bild, das verarbeitet werden soll, basierend auf dem Ziel-Lichteffektmodell umfasst:

Erlangen (314) eines Tiefenbilds korrespondierend mit dem Bild, das verarbeitet werden soll;
Erlangen (314) eines dreidimensionalen Modells korrespondierend mit der Gesichtsregion durch Durchführen von dreidimensionaler Rekonstruktion basierend auf dem Bild, das verarbeitet werden soll, und dem Tiefenbild; und
Durchführen (316) der Lichtverbesserungsverarbeitung an dem dreidimensionalen Modell basierend auf dem Ziel-Lichteffektmodell.

11. Verfahren nach einem der Ansprüche 1-9, wobei das Durchführen (208) von Lichtverbesserungsverarbeitung an dem Bild, das verarbeitet werden soll, basierend auf dem Ziel-Lichteffektmodell umfasst: Hinzufügen von Licht in verschiedenen Richtungen, Stärken und Farben zu dem Bild, das verarbeitet werden soll, basierend auf dem Ziel-Lichteffektmodell.

12. Verfahren nach Anspruch 1, wobei unter der Voraussetzung, dass das Referenz-Lichteffektmodell durch $P_0$ angegeben wird, der Lichteffekt-Intensitätskoeffizient durch r angegeben wird und das Ziel-Lichteffektmodell durch P angegeben wird, eine Berechnungsformel zum Erlangen des Ziel-Lichteffektmodells wie folgt ist:

$$P = r \times P_0.$$

13. Elektronische Vorrichtung (10), **dadurch gekennzeichnet, dass** sie einen Speicher und einen Prozessor umfasst; wobei der Speicher ein Computerprogramm speichert; wobei, wenn das Computerprogramm durch den Prozessor ausgeführt wird, der Prozessor ein Bildverarbeitungsverfahren nach einem der Ansprüche 1-12 durchführt.

14. Computerlesbares Speichermedium, das ein Computerprogramm speichert, **dadurch gekennzeichnet, dass**: wenn das Computerprogramm durch einen Prozessor ausgeführt wird, der Prozessor Operationen des Verfahrens nach einem der Ansprüche 1-12 durchführt.

## Revendications

1. Procédé de traitement d'image, comprenant les étapes suivantes :

obtenir (202, 302) une image à traiter ;
détecter (204) une ou plusieurs régions de visage dans l'image à traiter, et détecter une région surexposée dans chacune des une ou plusieurs régions de visage ;
pour chacune des une ou plusieurs régions de visage :

obtenir (206) un coefficient d'intensité de l'effet lumineux sur la base de la région surexposée, et obtenir (206, 312) un modèle d'effet lumineux cible sur la base du coefficient d'intensité de l'effet lumineux, le modèle d'effet lumineux cible étant un modèle qui simule un changement de lumière ; et
effectuer (208) un traitement d'amélioration de la lumière sur l'image à traiter par l'intermédiaire du modèle d'effet lumineux cible ;
**caractérisé en ce que** le procédé de traitement d'image comprend en outre les étapes suivantes :

prédéfinir un modèle d'effet lumineux de référence, le modèle d'effet lumineux de référence étant configuré pour simuler un changement de lumière ;
l'obtention (206) du coefficient d'intensité de l'effet lumineux sur la base de la région surexposée comprend les étapes suivantes :

obtenir (310) une deuxième valeur moyenne de luminosité des pixels dans la région surexposée ; et obtenir (310) le coefficient d'intensité de l'effet lumineux sur la base de la deuxième valeur de luminosité moyenne ;

l'obtention (206, 312) du modèle d'effet lumineux cible sur la base du coefficient d'intensité de l'effet lumineux comprend l'étape suivante :

ajuster le modèle d'effet lumineux de référence sur la base du coefficient d'intensité de l'effet lumineux afin d'obtenir le modèle d'effet lumineux cible.

2. Procédé selon la revendication 1, dans lequel la détection (204) des une ou plusieurs régions de visage dans l'image à traiter comprend les étapes suivantes :

diviser (304) les pixels de chacune des une ou plusieurs régions de visage en une pluralité de blocs de pixels, la pluralité de blocs de pixels étant différents les uns des autres ; obtenir (306) une première valeur moyenne de luminosité des pixels dans chacun de la pluralité de blocs de pixels ; former (308) une première région de pixels avec des blocs de pixels, chacun des blocs de pixels formant la première région de pixels ayant la première valeur moyenne de luminosité supérieure à un seuil de luminosité ; et former (308) la région surexposée sur la base de la première région de pixels.

3. Procédé selon la revendication 2, dans lequel la formation (308) de la région surexposée sur la base de la première région de pixels comprend les étapes suivantes :

pour chacune des une ou plusieurs régions de visage :

obtenir (502) une deuxième région de pixels dans la région de visage, la région de visage étant constituée de la première région de pixels et de la deuxième région de pixels ; binariser (504) la région de visage sur la base de la première région de pixels et de la deuxième région de pixels ; et déterminer (506) la région surexposée sur la base de la région de visage binarisée.

4. Procédé selon la revendication 3, dans lequel la binarisation (504) de la région de visage sur la base de la première région de pixels et de la deuxième région de pixels comprend les étapes suivantes :

configurer les valeurs de luminosité des pixels de la première région de pixels à une valeur de luminosité non nulle ; et configurer les valeurs de luminosité des pixels de la deuxième région de pixels à zéro.

5. Procédé selon la revendication 3, dans lequel la détermination (506) de la région surexposée sur la base de la région de visage binarisée comprend les étapes suivantes :

obtenir une région connectée dans la région de visage binarisée ; obtenir un rapport de surface de la région connectée par rapport à la région de visage ; et former la région surexposée sur la base de la région connectée dont le rapport de surface est supérieur à un seuil de surface.

6. Procédé selon la revendication 5, dans lequel l'obtention de la région connectée dans la région de visage binarisée comprend les étapes suivantes :

obtenir la région de visage binarisée ; procéder séquentiellement à l'expansion et à la corrosion sur la région de visage binarisée ; et obtenir la région connectée dans la région de visage binarisée après l'expansion et la corrosion.

7. Procédé selon la revendication 1, dans lequel l'obtention (310) du coefficient d'intensité de l'effet lumineux sur la base de la deuxième valeur moyenne de luminosité comprend les étapes suivantes :

obtenir le seuil de luminosité pour former la région surexposée ; et configurer un rapport entre le seuil de luminosité et la deuxième valeur moyenne de luminosité comme coefficient d'intensité de l'effet lumineux.

8. Procédé selon la revendication 1, dans lequel l'obtention (310) de la deuxième valeur de luminosité moyenne des pixels dans la région surexposée et l'obtention (310) du coefficient d'intensité de l'effet lumineux sur la base de la deuxième valeur de luminosité moyenne comprennent les étapes suivantes :

en réponse à la détection de deux régions de visage, ou davantage, dans l'image à traiter, obtenir (702) la deuxième valeur de luminosité moyenne de la région surexposée dans chaque région de visage ; et obtenir (704) le coefficient d'intensité de l'effet lumineux sur la base d'une deuxième moyenne de luminosité maximale parmi les deuxièmes valeurs moyennes de luminosité correspondant aux deux régions de visage, ou davantage.

9. Procédé selon la revendication 1, dans lequel l'exécution (208) d'un traitement d'amélioration de l'effet lumineux sur l'image à traiter sur la base du modèle d'effet lumineux cible comprend les étapes suivantes :

obtenir un paramètre d'amélioration de l'effet lumineux d'une valeur de canal de couleur correspondant à chaque pixel de l'image à traiter sur la base du modèle d'effet lumineux cible ; et effectuer le traitement d'amélioration de la lumière sur la valeur du canal de couleur de chaque pixel sur la base du paramètre d'amélioration de l'effet lumineux.

10. Procédé selon l'une quelconque des revendications 1 à 9, dans lequel l'exécution (208) du traitement d'amélioration de la lumière sur l'image à traiter sur la base du modèle d'effet lumineux cible comprend les étapes suivantes :

obtenir (314) une image de profondeur correspondant à l'image à traiter ; obtenir (314) un modèle tridimensionnel correspondant à la région de visage en effectuant une reconstruction tridimensionnelle sur la base de l'image à traiter et de l'image de profondeur ; et effectuer (316) le traitement d'amélioration de la lumière sur le modèle tridimensionnel sur la base du modèle d'effet lumineux cible.

11. Procédé selon l'une quelconque des revendications 1 à 9, dans lequel l'exécution (208) du traitement d'amélioration de la lumière sur l'image à traiter sur la base du modèle d'effet lumineux cible comprend l'étape suivante :
ajouter de la lumière dans différentes directions, avec différentes intensités et couleurs à l'image à traiter sur la base du modèle d'effet lumineux cible.

12. Procédé selon la revendication 1, dans lequel le modèle d'effet lumineux de référence étant indiqué par $P_0$, le coefficient d'intensité de l'effet lumineux étant indiqué par r, et le modèle d'effet lumineux cible étant indiqué par P, une formule de calcul pour obtenir le modèle d'effet lumineux cible est donnée par :

$$P = r \times P_0.$$

13. Dispositif électronique (10), **caractérisé en ce qu'**il comprend une mémoire et un processeur ; dans lequel la mémoire stocke un programme d'ordinateur et, lorsque le programme d'ordinateur est exécuté par le processeur, le processeur exécute un procédé de traitement d'image selon l'une quelconque des revendications 1 à 12.

14. Support de stockage lisible par ordinateur, stockant un programme d'ordinateur, **caractérisé en ce que** : lorsque le programme d'ordinateur est exécuté par un processeur, le processeur exécute des opérations du procédé selon l'une quelconque des revendications 1 à 12.

FIG. 1

An image to be processed is obtained. — 202

A face region in the image to be processed is detected, and an overexposed region in the face region is detected. — 204

A light effect intensity coefficient is obtained based on or according to or corresponding to the overexposed region, and a target light effect model is obtained based on the light effect intensity coefficient. The target light effect model is a model that simulates a change in light. — 206

A light enhancement processing is performed on the image to be processed based on the target light effect model. — 208

FIG. 2

```
                                                              ┌─ 302
┌─────────────────────────────────────────────────────────────────┐
│                                                                   │
│           An image to be processed is obtained.                   │
│                                                                   │
└─────────────────────────────────────────────────────────────────┘
                              │
                              ▼                               ┌─ 304
┌─────────────────────────────────────────────────────────────────┐
│  A face region in the image to be processed is detected, and pixels in the face region │
│   are divided into a plurality of pixel blocks, and the plurality of pixel blocks are   │
│                        different from each other.                 │
└─────────────────────────────────────────────────────────────────┘
                              │
                              ▼                               ┌─ 306
┌─────────────────────────────────────────────────────────────────┐
│                                                                   │
│    A first average brightness value of pixels in each pixel block is obtained.          │
│                                                                   │
└─────────────────────────────────────────────────────────────────┘
                              │
                              ▼                               ┌─ 308
┌─────────────────────────────────────────────────────────────────┐
│    A first pixel region is formed with pixel blocks, and each of the pixel blocks       │
│  forming the first pixel region has the first average brightness value greater than a   │
│  brightness threshold, and an overexposed region is formed based on the first pixel     │
│                              region.                              │
└─────────────────────────────────────────────────────────────────┘
                              │
                              ▼                               ┌─ 310
┌─────────────────────────────────────────────────────────────────┐
│   A second average brightness value of pixels in the overexposed region is obtained,    │
│  and a light effect intensity coefficient is obtained based on or by using or according │
│                     to the second average brightness value.       │
└─────────────────────────────────────────────────────────────────┘
                              │
                              ▼                               ┌─ 312
┌─────────────────────────────────────────────────────────────────┐
│                                                                   │
│  A target light effect model is obtained based on the light effect intensity coefficient.│
│                                                                   │
└─────────────────────────────────────────────────────────────────┘
                              │
                              ▼                               ┌─ 314
┌─────────────────────────────────────────────────────────────────┐
│  A depth image corresponding to the image to be processed is obtained, and a three-     │
│    dimensional model corresponding to the face region is obtained by performing         │
│  three-dimensional reconstruction based on the image to be processed and the depth      │
│                              image.                               │
└─────────────────────────────────────────────────────────────────┘
                              │
                              ▼                               ┌─ 316
┌─────────────────────────────────────────────────────────────────┐
│   A light enhancement processing is performed on the three-dimensional model            │
│                based on the target light effect model.            │
└─────────────────────────────────────────────────────────────────┘
```

FIG. 3

FIG. 4

502

A second pixel region other than the first pixel region in the face region is obtained.

504

The face region is binarized based on or by utilizing or according to the first pixel region and the second pixel region.

506

An overexposed region based on the binarized face region is determined.

FIG. 5

60

FIG. 6

702

In response to two or more face regions being detected in the image to be processed, a second average brightness value of the overexposed region in each face region is obtained.

704

The light effect intensity coefficient is obtained based on a maximum second average brightness average among the second average brightness values corresponding to the two or more face regions.

FIG. 7

Image Processing Device 800

802
Image Obtaining Module

804
Overexposure Detection Module

806
Model Obtaining Module

808
Light Effect Processing Module

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018077395 A1

- US 2007070214 A1

**Non-patent literature cited in the description**

- **CSAKANY P et al.** Relighting of Facial Images. *Proceedings of the 7th International conference on Automatic Face an Gesture Recognition,* 10 April 2006, 55-60